# EUROPEAN PATENT SPECIFICATION

(11) **EP 2 371 706 B1**
(45) Date of publication and mention of the grant of the patent: **05.12.2012**
(21) Application number: 09812435.7
(22) Date of filing: 17.12.2009
(51) Int. Cl.: B64C 3/18

(54) **TORSION BOX WITH RIB FITTING**
TORSIONSKASTEN MIT EINER RIPPENPASSUNG
CAISSON DE TORSION AVEC FERRURE DE NERVURE

(30) Priority: 17.12.2008 ES 200803580
(43) Date of publication of application: 05.10.2011
(73) Proprietor: Airbus Operations S.L., 28906 Getafe, Madrid (ES); Fundación Para La Investigación, Desarrollo Y Aplicación De Materiales Compuestos (FIDAMC), 28001 Madrid (ES)
(72) Inventor: FERNÁNDEZ SÁNCHEZ, Francisco José, E-28231 Las Rozas Madrid (ES); DOMÍNGUEZ ESCAURIAZA, Félix, E-28260 Galapagar Madrid (ES); HERNANDO SEBASTIÁN, Esperanza, E-28340 Valdemoro Madrid (ES)
(74) Representative: Elzaburu Marquez, Alberto
(86) International application number: PCT/ES2009/070595
(87) International publication number: WO 2010/070181

(56) References cited:
- EP-A2- 1 988 013
- WO-A1-03/022677
- WO-A1-2004/018183

## Description

### Field of the Invention

The present invention refers to an aircraft lift surface torsion box with a component for receiving and distributing a local load.

### Background of the Invention

Structures of aeronautical lift surfaces are traditionally formed by a torsion box in their resistant and load transit part.

One of the known configurations is the multi-rib configuration according to which the box is formed by two spars, closed by skins and reinforced against torsional loads by uniformly distributed ribs.

Another of the known configurations is the multi-spar configuration according to which the box is formed by two spars, closed by skins and reinforced against torsional loads by uniformly distributed inner spars.

Local load concentrations in torsion boxes coming from structures bound to it, such as pylons, control surfaces or supports in the fuselage, are usually introduced in the structure of the box through a fitting (usually formed by several parts) transmitting the load to a back-fitting (a rib in the case of a multi-rib box) which in turn distributes it to the rest of the box structure.

This way of introducing loads requires a large number of parts which are furthermore difficult to attach to one another, at the same time requiring a large amount of bolts which must have precise tightening torques and very low tolerances, which leads to consuming a considerable amount of assembly time and investing a lot of time in such assembly.

In an increasingly more competitive market, it is necessary to produce structures at the lowest possible cost and in the shortest possible time. Within this framework, it would be desirable to reduce the number of parts of the assembly of the mentioned fitting and back-fitting and to simplify their assembly process.

The present invention seeks to meet this demand.

### Summary of the Invention

An object of the present invention is to provide a torsion box with a component of an aircraft lift surface torsion box for receiving and distributing a local load made as a single piece.

Another object of the present invention is to provide a torsion box with a component of an aircraft lift surface torsion box for receiving and distributing a local load with the lowest possible weight.

Another object of the present invention is to provide a torsion box with a component of an aircraft lift surface torsion box for receiving and distributing a local load, which can be easily assembled.

Another object of the present invention is to provide efficient assembly processes for a torsion box with the cited component.

In a first aspect, these and other objects are achieved by means of a torsion box (comprising at least two front and back spars, two upper and lower skins with reinforcement stringers) comprising a part which is made of a composite material as a single piece and the configuration of which comprises:
- a substantially planar web with a first part in the form of a lug and a second part in the form of a rib
- Two flanges to attach the component web to the webs of each of the ends of the front or back spar
- Flanges for being attached to the upper and lower skins.
- gaps in the areas of intersection with the front or back spar caps to which the component is connected and with the reinforcement stringers.

In a preferred embodiment of said torsion box, the flanges for being attached to the upper and lower skins extend in opposite directions in relation to the plane of the web for each of the upper and lower skins. This achieves a component with a Z-shaped transverse profile facilitating its assembly in certain box configurations.

In another particular embodiment of said torsion box, the flanges for being attached to the upper and lower skins extend on both sides of the plane of the web for each of the upper and lower skins. This achieves a double T-shaped transverse profile which very efficiently transmits the load to the torsion box.

In a second aspect, an assembly process for assembling the mentioned component in a multi-spar box is provided comprising the following steps:
- Providing the pre-assembled torsion box with the two skins.
- Providing a component with the mentioned configuration of a Z-shaped profile.
- Introducing said component rotated a predetermined angle into the box.
- Moving said component to the site provided for its location and rotating it until it is correctly positioned.
- Coupling the component with the ends of the front or back spar to which it is connected.
- Attaching the component to the two skins and to the ends of the front or back spar to which it is connected.

In a third aspect, an assembly process for assembling the mentioned component in a multi-spar box is provided comprising the following steps:
- Providing the pre-assembled torsion box with the two skins.
- Providing a component with the mentioned configuration of a double T-shaped profile.
- Introducing said component into the box in the vertical position.
- Moving said component to the site provided for its location and correctly positioning it.
- Coupling the component with the ends of the front or back spar to which it is connected.
- Attaching the component to the two skins and to the ends of the front or back spar to which it is connected.

It is known in the state of the art, as per EP 1988013 A2, an aircraft component, particularly for an aircraft lift surface torsion box, made of a composite material in a single piece, comprising a web and two flanges.

Other features and advantages of the present invention will be understood from the following detailed description of an illustrative embodiment of the object of the invention in relation to the attached drawings.

### Description of the Drawings

Figure 1a shows a perspective view of a known multi-rib configuration torsion box and Figure 1b shows a cross-section view of Figure 1a along plane A-A.
Figure 2 shows a partial perspective view of a known multi-rib torsion box with a fitting-back-fitting assembly at a point of introducing a load into the box.
Figures 3a and 3b show cross-section views of known fitting-back-fitting assemblies for introducing loads into a multi-rib torsion box.
Figure 4a shows a perspective view of a known multi-spar configuration torsion box, and Figure 4b shows a typical cross-section view of this type of torsion box.
Figure 5 shows a cross-section view of a known fitting-back-fitting assembly for introducing loads into a multi-spar torsion box.
Figure 6a shows a schematic cross-section view of a known attachment for a fitting-back-fitting assembly to the torsion box.
Figure 6b shows a schematic cross-section view of the attachment of the component for receiving and distributing a local load to the torsion box, according to the present invention.
Figure 7a shows a perspective view of a preferred embodiment of a component for receiving and distributing a local load to the torsion box, according to the present invention.
Figure 7b shows a schematic side-section view of the component of Figure 7a assembled to the torsion box.
Figure 8 illustrates the assembly process for assembling the component of Figure 7a to the torsion box.
Figure 9a shows a perspective view of another preferred embodiment of a component for receiving and distributing a local load to the torsion box, according to the present invention.
Figure 9b shows a schematic side-section view of the component of Figure 9a assembled to the torsion box.
Figure 10 illustrates the assembly process for assembling the component of Figure 9a to the torsion box.

### Detailed Description of the Invention

The known art for introducing and distributing local loads to an aircraft lift surface torsion box will be briefly described first.

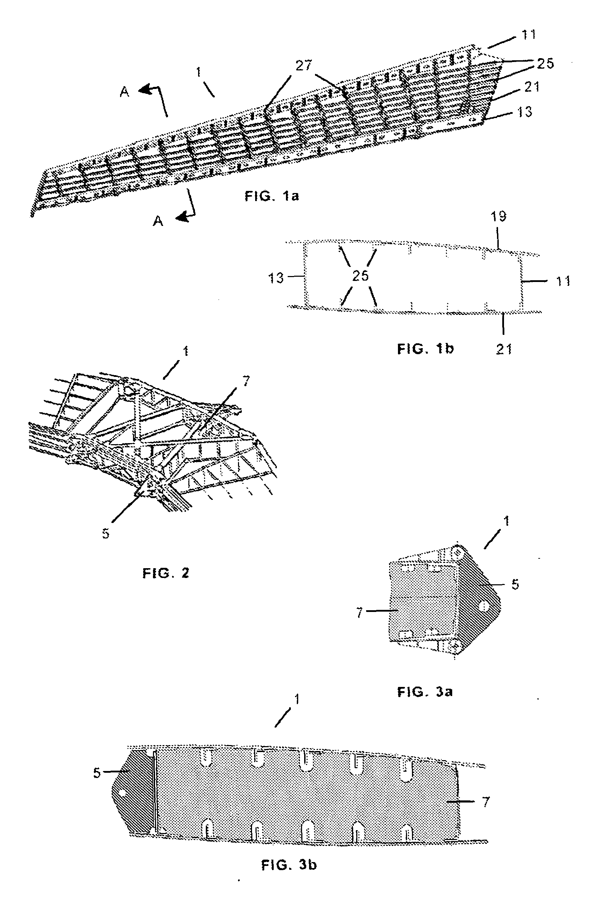

A multi-rib configuration torsion box 1 such as the one depicted in Figures 1a and 1b is structurally based on a front spar 11 and a back spar 13 (understanding the terms front and back in relation to the flight direction of the aircraft), two upper and lower skins 19, 21 with a plurality of reinforcement stringers 25 and a plurality of transverse ribs 27.

Fittings 5, such as the one depicted in Figure 2, are included in this type of torsion box 1 for receiving local loads that are distributed to the rest of the box through the back-fitting 7.

Two embodiments of these fitting 5 back-fitting 7 assemblies are observed in Figures 3a and 3b in which the back-fittings 7 are similar to the transverse ribs 27.

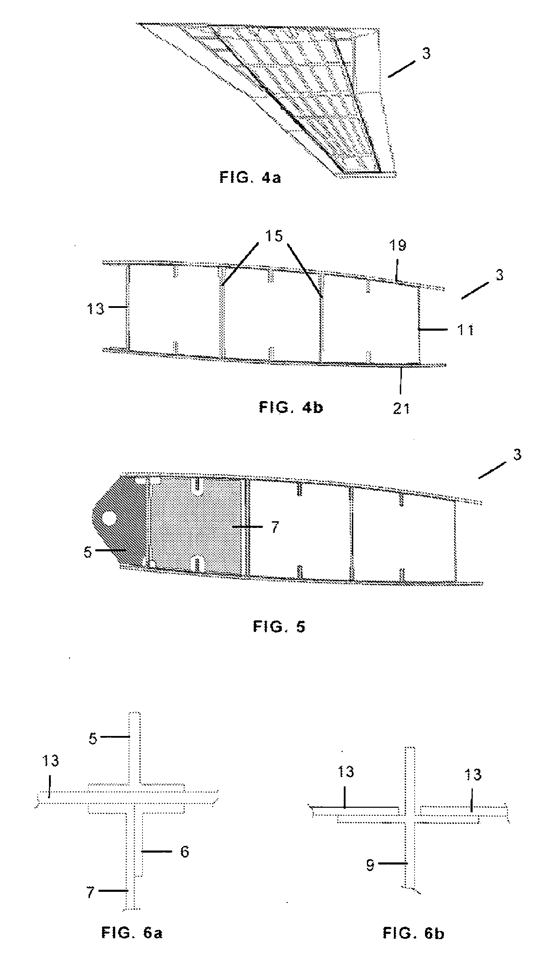

In addition, a multi-spar configuration torsion box 3, such as the one depicted in Figures 4a and 4b, is structurally based on a front spar 11 and a back spar 13 (understanding the terms front and back in relation to the flight direction of the aircraft), two upper and lower skins 19, 21 with a plurality of reinforcement stringers 25 and a plurality of inner intermediate longitudinal spars 15.

Figure 5 shows an embodiment of a fitting 5 back-fitting 7 assembly for receiving and distributing local loads in a multi-spar torsion box 3.

Figure 6a illustrates the known attachment of the fitting 5 back-fitting 7 assembly used both in multi-rib torsion boxes 1 and in multi-spar torsion boxes 3 using an angle fitting 6 to create the necessary planar surfaces between the different elements to enable attachment by means of bolts (not depicted).

Now describing the present invention, it must first be indicated that the basic idea of this invention is to provide a single component 9 for introducing and distributing local loads to an aircraft lift surface torsion box instead of the fitting 5 back-fitting 7 assembly of the prior art. This is schematically depicted in Figure 6b, showing the component 9, made of one part, attached to the back spar 13 (or, where appropriate to the front spar 11). The single component 9 is therefore a single structural member capable of performing the functions of the mentioned fitting 5 and back-fitting 7, thus reducing the number of parts to be manufactured, assembled and mounted.

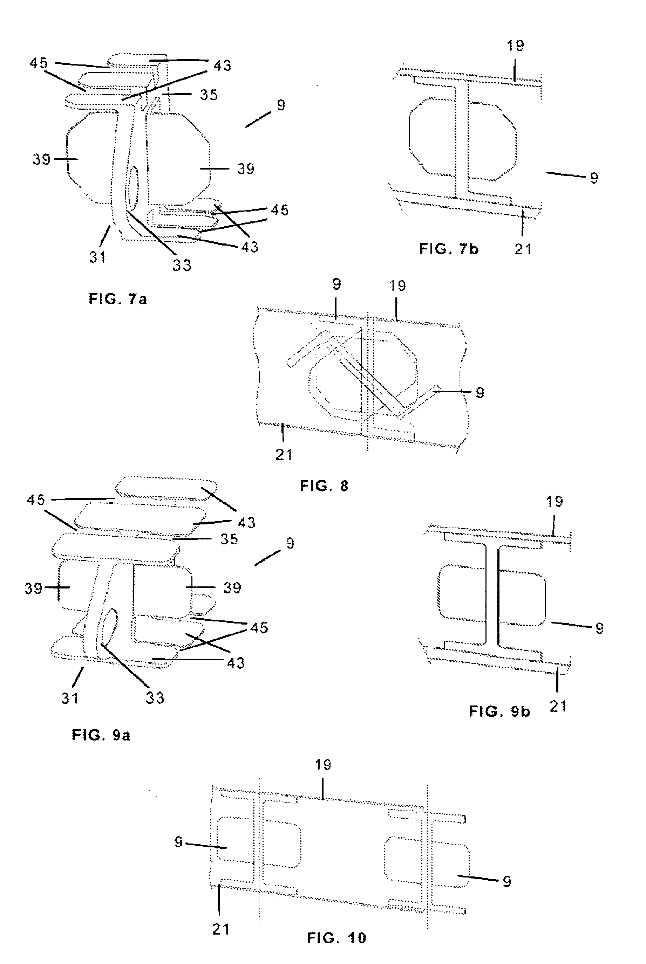

The following members of the configuration of the embodiment illustrated in Figures 7a and 7b must be pointed out:
- A substantially planar web 31 with a first part in the form of a lug 33 for receiving the local load and a second part in the form of a rib web for the distribution of the load to the rest of the box.
- Two flanges 39 for attaching the web 31 to the webs of each of the ends of the back spar 13 (or, where appropriate, the front spar 11). It must be observed that the back spar 13 must be cut at the location provided for the component 9.
- Several flanges 43 for being attached to the upper skin 19 and lower skin 21 extending in opposite directions in relation to the plane of the web 31, such that the component 9 acquires a Z-shaped transverse profile.
- Several gaps 45 in the areas of intersection with the back spar caps 13 (or, where appropriate, the front spar 11) and the reinforcement stringers 25. These gaps 45 must avoid any interference between the component 9 and the back spar 13 (or, where appropriate, the front spar 11) and or the reinforcement stringers 25, both in their final position and during the assembly process.

With this configuration of the component 9 as a single piece, the local load is introduced into the torsion box through the lug 33 and extends through the rib web 35 which distributes it to the skins 19, 21 and to the web of the back spar 13 (or, where appropriate, the front spar 11) through riveted attachments (not depicted) in the areas of the flanges 39, 43.

In the embodiment illustrated in Figures 9a, 9b, the only difference in the configuration compared to the embodiment just described is that the flanges 43 for being attached to the upper skin 19 and lower skin 21 extend on both sides of the plane of the web31, such that the component 9 acquires a double-T shaped transverse profile.

In a preferred embodiment of the present invention for a multi-spar torsion box 3, the rib web 35 extends from the front or back spar (11, 13) to which the component (9) is assembled to the closest intermediate spar (15).

In a preferred embodiment of the present invention for a multi-rib torsion box 1, the rib web 35 extends from the two front and back spars 11, 13.

The manufacturing process recommended for the component 9 is RTM (resin transfer moulding) because it allows obtaining the complete structure in a single piece.

The assembly of the component 9 in a multi-rib torsion box is similar to the assembly of the ribs forming part of the box which is done before placing one of the skins. The installation of both parts of the back spar 13 (or, where appropriate, the front spar 11) is the last part of the installation of the component 9 within the box assembly process.

In a multi-spar box, the limitations of access to the inside of the box limit and determine the geometry of the component 9.

In the case of the configuration depicted in Figures 7a and 7b and as illustrated in Figure 8, the component 9 rotated approximately 40° is introduced in the box. It is rotated to its final position inside the cell of the box where it will be located. Once the component 9 is placed, the two parts of the web of the back spar (or, where appropriate, the front spar 11) will be assembled thereon.

In the case of the configuration depicted in Figures 9a and 9b and as illustrated in Figure 10, the component 9 is introduced vertically in the box in the area of the root rib (without this rib being assembled) and is moved along the box to its final position. Once it is fixed, the two parts of the web of the back spar (or, where appropriate, the front spar 11) will be assembled thereon.

Any modifications comprised within the scope defined by the following claims can be introduced in the preferred embodiment described above.

## Claims

1. An aircraft lift surface torsion box (1, 3) comprising at least two front and back spars (11, 13), two upper and lower skins (19, 21) with reinforcement stringers (25) and a component (9) for receiving and distributing a local load, the component (9) being made of a composite material as a single piece, **characterized in that** the component comprises:
- a substantially planar web (31) with a first part in the form of a lug (33) and a second part in the form of a rib web (35);
- two flanges (39) attached to each of the ends of the webs of the front or back spar (11, 13); which are cut at the location provided for the component;
- flanges (43) attached to the upper and lower skins (19, 21);
- gaps (45) in the areas of intersection with the front or back spar caps(11, 13)
and with the reinforcement stringers (25).

2. Torsion box (1, 3) according to claim 1, **characterized in that** said flanges (43) attached to the upper and lower skins (19, 21) extend in opposite directions in relation to the plane of the web (31) for each of the upper and lower skins (19, 21).

3. Torsion box (1, 3) according to claim 1, **characterized in that** said flanges (43) attached to the upper and lower skins (19, 21) extend on both sides of the plane of the web (31) for each of the upper and lower skins (19, 21).

4. Torsion box (1, 3) according to one of claims 1-3, **characterized in** it is a multi-spar box and **in that** the rib web (35) extends from the front or back spar (11, 13) to which the component (9) is assembled to the closest intermediate spar (15).

5. Torsion box (1, 3) according to one of claims 1-3, **characterized in that** it is a multi-rib box and **in that** the rib web (35) extends from the front and back spars (11, 13).

6. An assembly process for assembling the component (9) of a multi-spar torsion box (3) according to claim 2, **characterized in that** it comprises the following steps:
a) providing the pre-assembled torsion box (3) with the two skins (19, 21);
b) providing the component (9);
c) introducing said component (9) rotated a predetermined angle into the torsion box (3);
d) moving said component (9) to the site provided for its location and rotating it until it is correctly positioned;
e) coupling the component (9) with the ends of the webs of the front or back spar (11, 13);
f) attaching the component (9) to the two skins (19, 21) and to the ends of the webs of the front or back spar (11, 13).

7. An assembly process for assembling a multi-spar torsion box (3) according to claim 3, **characterized in that** it comprises the following steps:
a) providing the pre-assembled torsion box (3) with the two skins (19, 21);
b) providing the component (9);
c) introducing vertically said component (9) into the torsion box (3);
d) moving said component (9) to the site provided for its location;
e) coupling the component (9) with the ends of the webs of the front or back spar (11, 13);
f) attaching the component (9) to the two skins (19, 21) and to the ends of the webs of the front or back spar (11, 13).

## Patentansprüche

1. Torsionsbox (1, 3) für eine Auftriebsfläche eines Flugzeugs, mit mindestens einem vorderen und einem hinteren Holm (11, 13), einer oberen und einer unteren Außenhaut (19, 21) mit Verstärkungsstreben (25), und einer Komponente (9) zum Aufnehmen und Verteilen einer lokalen Belastung, wobei die Komponente einteilig aus einem Verbundmaterial hergestellt ist;
**dadurch gekennzeichnet, dass** die Komponente aufweist:
- ein im Wesentlichen planares Stegelement (31) mit einem ersten Abschnitt in der Form eines Anschlussstücks (33) und einem zweiten Abschnitt in der Form eines Rippenstegs (35);
- zwei Flansche (39), die an den jeweiligen Enden des Stegelements des vorderen oder des hinteren Holms (11, 13) angebracht sind, die an der für die Komponente vorgesehenen Stelle ausgeschnitten sind;
- an der oberen und an der unteren Außenhaut (19, 21) befestigte Flansche (43); und
- Zwischenräume (45) an den Kreuzungsbereichen mit dem vorderen oder dem hinteren Holm (11, 13) und mit den Verstärkungsstreben (25).

2. Torsionsbox (1, 3) nach Anspruch 1, **dadurch gekennzeichnet, dass** die an der oberen und an der unteren Außenhaut (19, 21) angebrachten Flansche (43) sich bezüglich der Ebene des Stegelements (31) für die obere und die untere Außenhaut (19, 21) in entgegengesetzte Richtungen erstrecken.

3. Torsionsbox (1, 3) nach Anspruch 1, **dadurch gekennzeichnet, dass** die an der oberen und an der unteren Außenhaut (19, 21) angebrachten Flansche (45) sich auf beiden Seiten der Ebene des Stegelements (31) für die obere und die untere Außenhaut (19, 21) erstrecken.

4. Torsionsbox (1, 3) nach einem der Ansprüche 1 bis 3, **dadurch gekennzeichnet, dass** sie eine Box mit mehreren Holmen ist, und dass der Rippensteg (35) sich vom vorderen oder hinteren Holm (11, 13), an dem die Komponente (9) montiert ist, zum nähesten Zwischenholm (15) erstreckt.

5. Torsionsbox (1, 3) nach einem der Ansprüche 1 bis 3, **dadurch gekennzeichnet, dass** sie eine Box mit mehreren Rippen ist, und dass der Rippensteg (35) sich vom vorderen und vom hinteren Holm (11, 13) erstreckt.

6. Montageprozess zum Montieren der Komponente (9) einer Torsionsbox (3) mit mehreren Holmen nach Anspruch 2, **dadurch gekennzeichnet, dass** das Verfahren die folgenden Schritte aufweist:
a) Bereitstellen der vormontierten Torsionsbox (3) mit zwei Außenhäuten (19, 21);
b) Bereitstellen der Komponente (9);
c) Einsetzen der um einen vorgegebenen Winkel gedrehten Komponente (9) in die Torsionsbox (3);
d) Bewegen der Komponente (9) zu ihrer vorgesehenen Einbaustelle und Drehen der Komponente, bis sie korrekt positioniert ist;
e) Verbinden der Komponente (9) mit den Enden der Stegelemente des vorderen oder des hinteren Holms (11, 13); und
f) Anbringen der Komponente (9) an den beiden Außenhäuten (19, 21) und an den Enden der Stegelemente des vorderen oder des hinteren Holms (11, 13).

7. Montageprozess zum Montieren einer Torsionsbox (3) mit mehreren Holmen nach Anspruch 3, **dadurch gekennzeichnet, dass** das Verfahren die folgenden Schritte aufweist:
a) Bereitstellen der vormontierten Torsionsbox (3) mit zwei Außenhäuten (19, 21);
b) Bereitstellen der Komponente (9);
c) vertikales Einsetzen der Komponente (9) in die Torsionsbox (3);
d) Bewegen der Komponente (9) zu ihrer vorgesehenen Einbaustelle;
e) Verbinden der Komponente (9) mit den Enden der Stegelemente des vorderen oder des hinteren Holms (11, 13); und
f) Anbringen der Komponente (9) an den beiden Außenhäuten (19, 21) und an den Enden der Stegelemente des vorderen oder des hinteren Holms (11, 13).

## Revendications

1. Caisson de torsion (1, 3) de surface portante d'aéronef comprenant au moins deux longerons avant et arrière (11, 13), deux revêtements supérieur eut inférieur (19. 21) avec des lisses de renforcement (25) et un composant (9) destiné à recevoir et à repartir une charge locale, le composant (9) étant d'un matériau composite formé d'une seule pièce, **caractérisé en ce que** le composant comprend :
- une âme sensiblement plane (31) avec une première partie ayant la forme d'un ergot (33) et une deuxième partie ayant la forme d'une âme de nervure (35);
- deux semelles (39) fixées à chacune des extrémités des âmes du longeron avant ou du longeron arrière (11, 13) qui sont découpées à l'emplacement prévu pour le composant ;
- des semelles (43) fixées aux revêtements supérieur et inférieur (19, 21);
- des fentes (45) dans les zones d'intersection avec les semelles de longeron avant ou arrière (11, 13) et des lisses de renforcement (25).

2. Caisson de torsion (1, 3) selon la revendication 1, **caractérisé en ce que** lesdites semelles (43) fixées aux revêtements supérieur et inférieur (19, 21) s'étendent dans des directions opposées par rapport au plan de l'âme (31) pour chacun des revêtements supérieur et inférieur (19, 21).

3. Caisson de torsion (1, 3) selon la revendication 1, **caractérisé en ce que** lesdites semelles (43) fixées aux revêtements supérieur et inférieur (19, 21) s'étendent des deux côtés du plan de l'âme (31) pour des revêtements supérieur et inférieur (19, 21).

4. Caisson de torsion (1, 3) selon l'une des revendications 1 à 3, **caractérisé en ce qu'**il s'agit d'un caisson multilongeron et **en ce que** l'âme de nervure (35) s'étend depuis le longeron avant ou le longeron arrière (11, 13) auquel le composant (9) est assemblé au longeron intermédiaire le plus proche (15).

5. Caisson de torsion (1, 3) selon l'une des revendications 1 à 3, **caractérisé en ce qu'**il s'agit d'un caisson multinervure et **en ce que** l'âme de nervure (35) s' étend depuis les longerons avant et amère (11, 13).

6. Procédé d'assemblage pour assembler le composant (9) d'un caisson de torsion multilongeron (3) selon la revendication 2, **caractérisé en ce qu'**il comprend les étapes suivantes consistant à :
a) fournir le caisson de torsion (3) préassemblé avec les deux revêtements (19, 21) ;
b) fournir le composant (9) ;
c) introduire ledit composant (9) pivoté d'un angle prédéterminé dans le caisson de torsion (3) ;
d) déplacer ledit composant (9) vers le lieu prévu pour son emplacement et le faire pivoter jusqu'à ce qu'il soit correctement positionné;
e) coupler le composant (9) aux extrémités des âmes du longeron avant, ou du longeron arrière (11, 13);
f) fixer le composant (9) aux deux revêtements (19, 21) et aux extrémités des âmes du longeron avant ou du longeron arrière (11, 13).

7. Procédé d'assemblage pour assembler un caisson de torsion multilongeron (3) selon la revendication 3, **caractérisé en ce qu'**il comprend les étapes suivantes consistant à :
a) fournir le caisson de torsion (3) préassemblé avec les deux revêtements (19,21);
b) fournir le composant (9) ;
c) introduire verticalement ledit composant (9) dans le caisson de torsion (3);
d) déplacer ledit composant (9) vers le lieu prévu pour son remplacement;
e) coupler le composant (9) aux extrémités des âmes du longeron avant ou du longeron (11, 13);
f) fixer le composant (9) aux deux revêtements (19, 21) et aux extrémités des âmes du longeron avant ou du longeron arrière (11, 13).
